# EUROPEAN PATENT APPLICATION

(11) **EP 0 604 059 A2**
(43) Date of publication of application: **29.06.1994**
(21) Application number: 93309821.2
(22) Date of filing: 07.12.1993
(51) Int. Cl.: H04N 5/76

(54) **Video-memory control apparatus**

(30) Priority: 21.12.1992 JP 339925/92
(71) Applicant: MATSUSHITA ELECTRIC INDUSTRIAL CO., LTD., Kadoma-shi, Osaka-fu, 571 (JP)
(72) Inventor: Nakai, Seiji, Osaka-shi, Osaka-fu 538 (JP); Kubota, Masashi, Koube-shi, Hyogo-ken 651-12 (JP); Nishio, Toshiroh, Kyoto-shi, Kyoto 604 (JP); Suzuki, Hidekazu, Yamatokouriyama-shi, Nara-ken 639-11 (JP)
(74) Representative: Crawford, Andrew Birkby

(57) **Abstract**

A video-memory control apparatus produces, in digital processing, e.g. digital filtering, of video signals with a plurality of processors, an improved video memory control signal which is in phase with its corresponding video data containing a delay attributed to the digital processing and delivers it to a video memory (e.g. a line or frame memory) coupled to each of the processors as a delayer. In the video-memory control apparatus, a first counter circuit waits for a period of time which is equal to the delay thus to retard the counting action of both a second counter circuit (i.e. a dot counter) and a third counter circuit (i.e. a line counter), whereby the video memory control signal will be released at best timing.

## Description

The present invention relates to a video-memory control apparatus for controlling a video memory, e.g. a line or frame memory, which is used to delay digital video data in digital processing of video signals such, for example, as a filtering operation.

A video-memory control apparatus responsive to a video signal data sampling clock signal for producing a memory control signal supplied to a video memory is equivalent in circuitry arrangement to a known circuit for producing a sync signal in response to a clock signal. The apparatus may comprise counter circuits and memories coupled to the counter circuits. As to the horizontal direction of a picture, a counter circuit is provided for counting clock pulses in each horizontal scanning period and delivering a counted result as a horizontal pixel position signal (this counter will be referred to as a dot counter circuit hereinafter), and a memory is provided for receiving the horizontal pixel position signal as its address input and outputting a corresponding horizontal memory control signal data which has been stored therein. The dot counter circuit produces a line clock signal upon completing the counting for each horizontal scanning period. As to the vertical direction of the picture, there are provided a counter circuit (referred to as a line counter circuit) for counting line clock pulses in each vertical scanning period and delivering a counted result as a vertical pixel position signal, and a memory receiving the vertical pixel position signal as its address input for outputting a corresponding vertical memory control signal data which has been stored therein. The horizontal and vertical memory control signal data are combined by a logical operation circuit to produce a video memory control signal.

In such a conventional video-memory control apparatus, the counting actions of the dot and line counter circuits are triggered by a reference position signal pulse (e.g. a frame pulse).

It is now assumed that the video-memory control apparatus is employed to control a group of video memories coupled to processors, respectively, which constitute a video signal processing system. As the input video data is processed by the processors, delay times are accumulated. The video data at the first one of the parallel disposed processors is in phase with the video memory control signal produced in response to the reference position signal pulse in the video-memory control apparatus. However, a video data output of the first processor to be transferred to the succeeding processor contains a delay. Accordingly, the video data at the succeeding processor is out of phase with the video memory control signal produced in response to the same reference position signal in the video-memory control apparatus. This causes the video-memory control apparatus to fail to write data into and read data from the video memories at desired timings and will thus cause a loss in the video data.

It is an object of the present invention to provide a memory control apparatus which produces a memory control signal which is in phase with a video data containing a delay generated by a preceding processor during read/write operations of a video memory.

To achieve the above object, a video-memory control apparatus according to the present invention comprises: a register for setting a number of clock pulses to be counted; a waiting counter circuit starting counting externary given clock pulses in response to an externary given reference position signal for producing, after having counted the number of clocks set by the register, a count-end signal; a dot counter starting counting the clock pulsed in response to the count-end signal for producing a dot count value and for producing, upon having counted the clock pulses in each horizontal scanning period, a line clock signal; a line counter circuit starting counting the line clock signal in response to the count-end signal for producing a line count value; a first memory receiving the dot count value as an address input data for outputting a first control data having been stored therein; a second memory receiving the line count value as an address input data for outputting a second control data having been stored therein; and a logical operation circuit for subjecting the first and second control data to a logical operation to obtain a video memory control signal which is applied to a video memory.

The waiting counter circuit waits from the leading edge of the reference position pulse signal for a period of time which is equal to a delay resulting from a processing operation in order to retard the counting start timings of both the dot and line counter circuits. Thus, the video memory control signal will be produced to be in phase with a video data delayed due to the processing operation and an unwanted loss in the video data will be avoided in the write and read operations of the video memory.
Fig. 1 is a block diagram of a video-memory control apparatus showing a first embodiment of the present invention;
Fig. 2 is a block diagram of a dot counter circuit of the first embodiment;
Fig. 3 is block diagram of a line counter circuit of the first embodiment;
Fig. 4 is a block diagram of a logical operation circuit of the first embodiment;
Fig. 5 is a block diagram of a waiting counter circuit of the first embodiment;
Fig. 6 is a timing chart showing the timings of signals in the waiting counter circuit illustrated in Fig. 5;
Fig. 7 is a block diagram of a video signal processing system employing the video-memory control apparatuses illustrated Fig. 1;
Fig. 8 is a timing chart showing the timings of signals in the video signal processing system illustrated in Fig. 7; and
Fig. 9 is a block diagram of a video memory control apparatus of a second embodiment of the present invention.

Preferred embodiments of the present invention will be described in the form of a video-memory control apparatus with reference to the accompanying drawings.

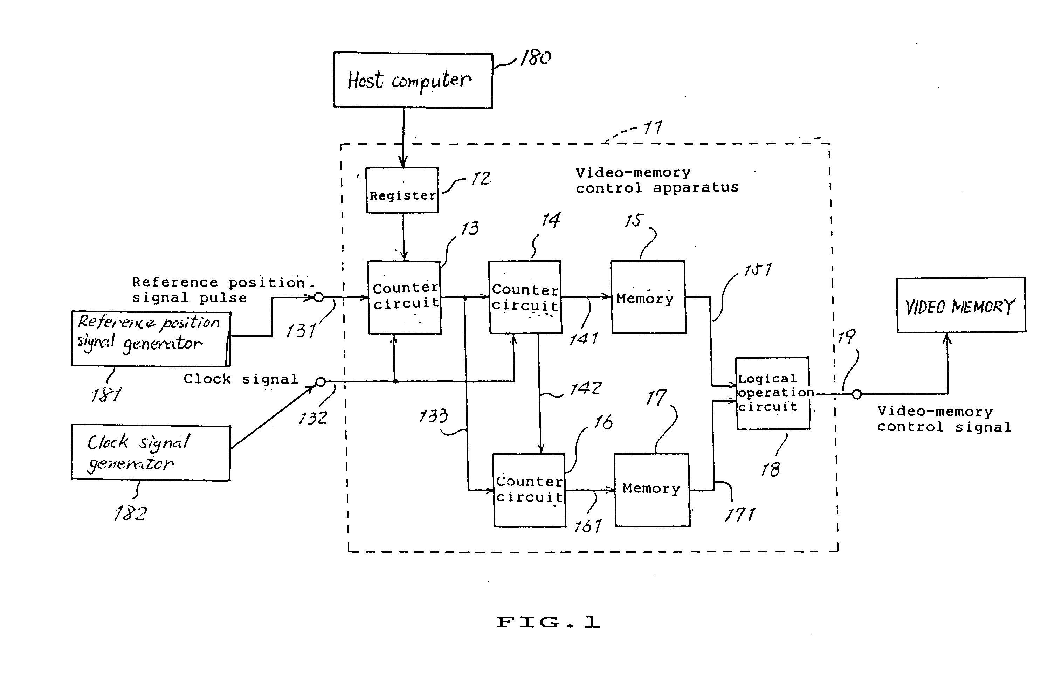

Fig. 1 is a block diagram of a video-memory control apparatus of a first embodiment of the present invention. The video-memory control apparatus denoted by the numeral 11 comprises a register 12, three counter circuits 13, 14 and 16, two memories 15 and 16, and a logical operation circuit 18.

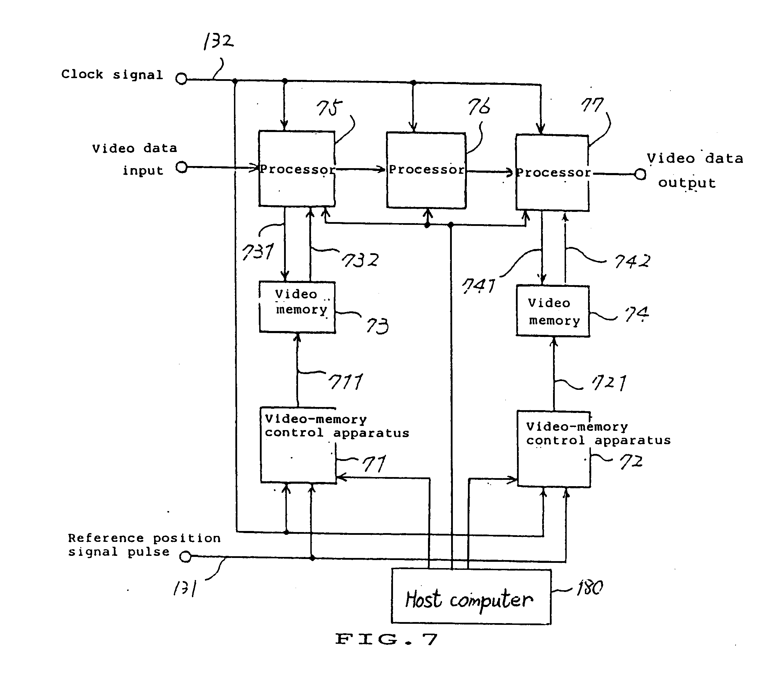

The register 12 is connected to a host computer 180 which connected also to a plurality of parallel-connected processors as shown in Fig. 7 for loading programs to the processors. The host computer 180, when changing a program to be loaded to a processor, calculates a processing delay time caused by a processing performed by the program and an accumulated processing delay time caused by the processings performed by the plurality of processors, and loads a value of a number of clock pulses corresponding to the accumulated processing delay time to the register 12. The counter circuit 13 (waiting counter circuit) is responsive to a reference position signal pulse 131 (e.g. a frame pulse) for starting counting clock pulses of a clock signal 132 and, when the count value reaches the value set in the register 12, produces a count-end signal 133. The reference position signal 131 and the clock signal 132 are generated by an external reference position signal generator 181 and an external clock signal generator 182, respectively.

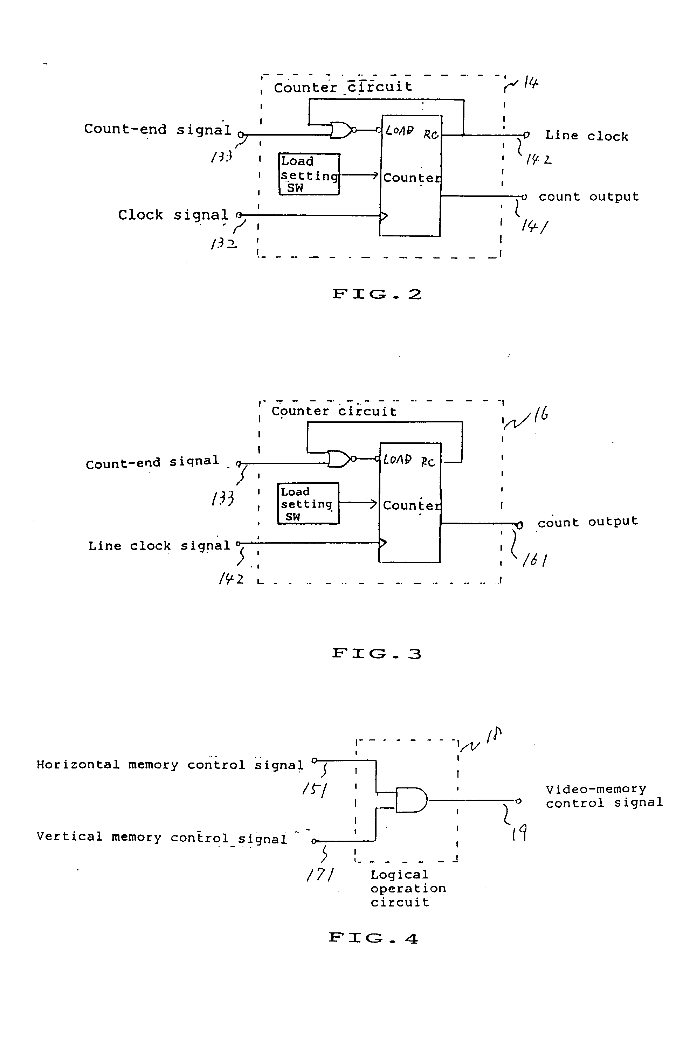

The counter circuit 14 (dot counter circuit) best shown in Fig. 2 starts counting clock pulses of the clock signal 132 in response to the count-end signal 133 and continues counting in one horizontal scanning period predetermined by a load setting switch to produce a count value 141 (indicative of a horizontal pixel position on a screen image). The counter circuit 14 produces also a line clock signal 142 upon each completion of counting in one horizontal scanning period. The memory 15 has stored therein a set of memory control signal data corresponding to respective horizontal pixel positions and receives the count value 141 as its address input to output a corresponding data as a horizontal memory control signal 151.

The counter circuit 16 (line counter circuit) shown in Fig. 3 is responsive to the count-end signal 133 for starting counting the line clock signal 142 and continues counting for one vertical scanning period predetermined by a load setting switch to produce a count value 161 indicative of a vertical pixel position on a screen image. The memory 17 has stored therein a set of memory control signal data corresponding to respective vertical pixel positions and receives the count value 161 as its address input to output a corresponding data as a vertical memory control signal 171.

The horizontal and vertical memory control signals 151 and 171 are subjected to a logical operation in the logical operation circuit 18 (an AND circuit in this embodiment) best shown in Fig. 4 to be a video memory control signal 19.

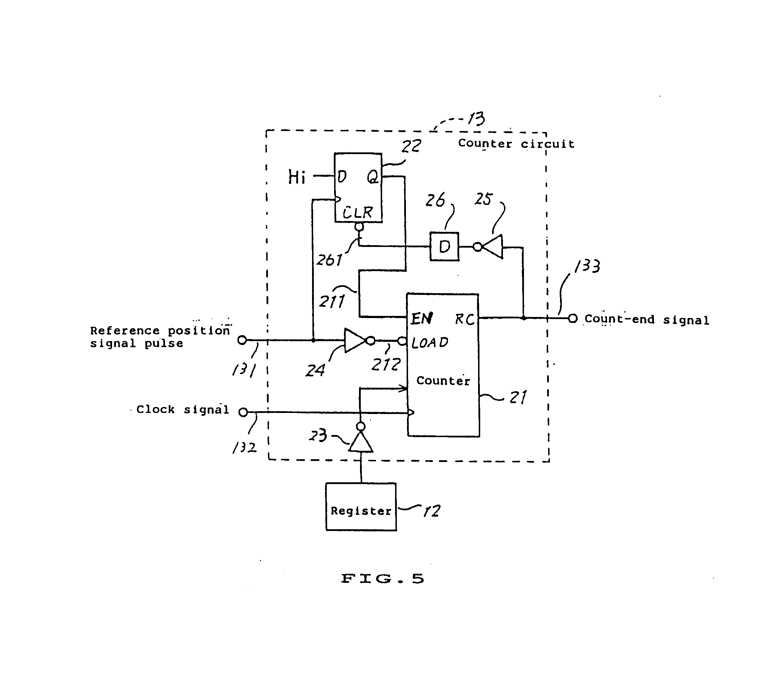

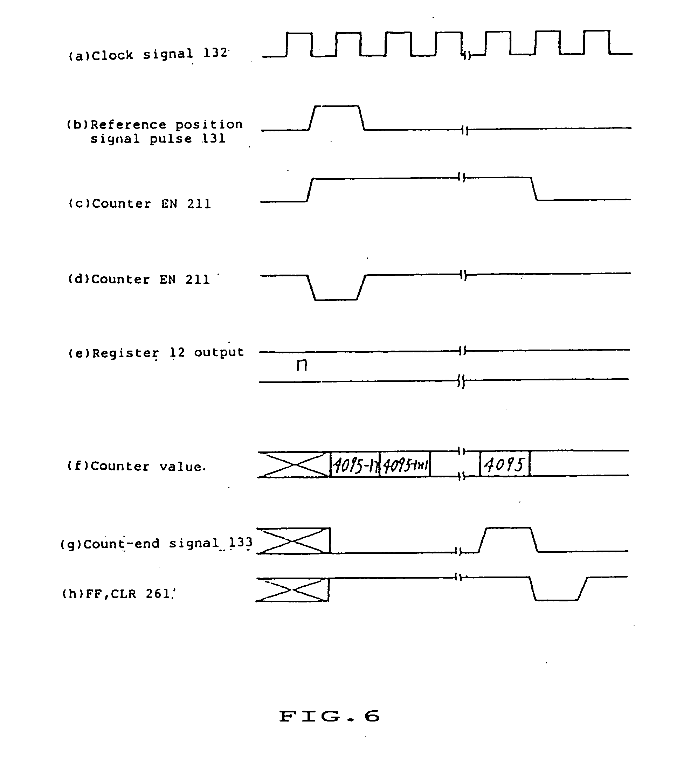

Fig. 5 is a detailed block diagram of the waiting counter circuit 13 and Fig. 6 is a timing chart showing the timings of signals in the same. The counter circuit 13 comprises a counter 21, a flip-flop (FF) 22, three inverters 23, 24 and 25, and a delayer 26. When the reference position signal pulse 131 (denoted in Fig. 6(b)) is introduced, an enable signal (EN) 211 (denoted in Fig. 6(c)) of the counter 21 becomes "high" (enable) and also, the inverted value of the register 12 is loaded by a LOAD signal 212 (denoted in Fig. 6(d)) to the counter 21. It is now assumed that the delay is n clock pulses and the counter 21 is of 12-bit type (with full count of 4095). As the register 12 delivers an output of n (denoted in Fig. 6(e)), the counter 21 counts pulses of the clock signal 132 from 4095-n to 4095 (as denoted in Fig. 6(f)). The counter 21 when completing the counting up to 4095 releases a carry signal (RC) as the count-end signal 133 (denoted in Fig. 6(g)). At the time, the count-end signal 133 is fed to the flip-flop 22 as a clear signal (CLR) 261 (denoted in Fig. 6(h)) for shifting the enable signal (EN) 211 to a disable state, thus allowing the flip-flop 22 to be ready to receive the next reference position signal pulse 131.

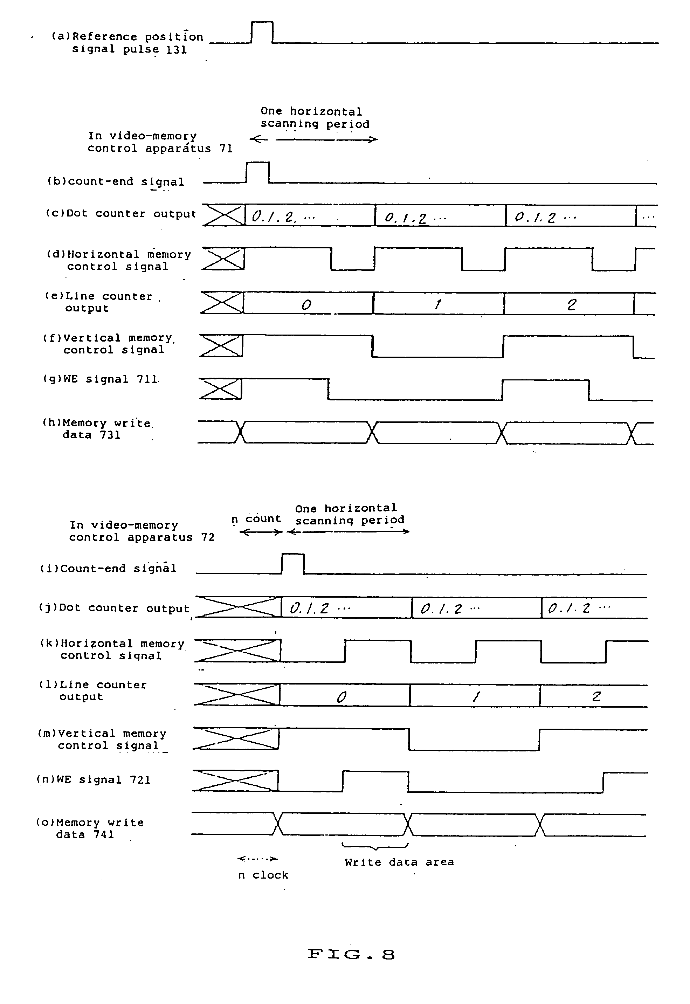

The operation of the video-memory control apparatus of the first embodiment will now be explained as installed in a video signal processing system shown in Fig. 7 employing a plurality of processors 75 to 77. Fig. 8 is a timing chart showing the timings of signals in the system with the two video-memory control apparatuses denoted by 71 and 72. Although the same reference position signal pulse 131 is fed to both the video-memory control apparatuses 71 and 72, each of their registers (12 in Fig. 1) can separately be preset to a given number of clock pulses to be counted which corresponds to a delay of video data, so that the timing of the count-end signal can be controlled. Actually, the two registers of their respective video-memory control apparatuses 71 and 72 are set with 0 and n, respectively, because a memory write data 731 contains no delay and a memory write data 741 contains a delay resulting from the data processing. In the video-memory control apparatus 71, the count-end signal (denoted by Fig. 8(b)) is produced in response to the input of the reference position signal 131 (denoted by Fig. 8(a)) and starts the counting actions of the dot and line counter circuits. The dot and line counter circuits produce count values (denoted by (c) and (e) of Fig. 8 respectively), or horizontal and vertical memory control signals, respectively, (denoted by (d) and (f) of Fig. 8) which are then subjected to logical AND operation to produce a video memory control signal or more specifically, a write enable (WE) signal 711 denoted by Fig. 8(g). As illustrated, each data write period (a high-level period) of the write enable signal 711 is in phase with the memory write data 731 (denoted by Fig. 8(h)). In the video-memory control apparatus 72, the release of the count-end signal (denoted by Fig. 8(i)) is delayed by a period of n clock pulses from the input of the reference position signal 131 (denoted by Fig. 8(a)) and then the counting actions of the dot and line counter circuits starts. Then, the count values of the dot and line counter circuits (denoted by (j) and (I) of Fig. 8 respectively), or horizontal and vertical memory control signals, respectively, (denoted by (k) and (m) of Fig. 8) are subjected to logical AND operation to produce another write enable (WE) signal 721 denoted by Fig. 8(n). Also, each data write period (a high-level period) of the write enable signal 721 is in phase with the memory write data 741 (denoted by Fig. 8(₀)), although the data 741 has been delayed by the n clock pulses.

As described, the video-memory control apparatus of the first embodiment can produce during write and read operation on a video memory a specific memory control signal arranged in phase with any relevant video data which may have a delay as having been processed in a processor or processors.

Another video-memory control apparatus according to a second embodiment of the present invention will be described. This embodiment is directed towards the capability of selectively determining the polarity of a video memory control signal to be fed to a video memory.

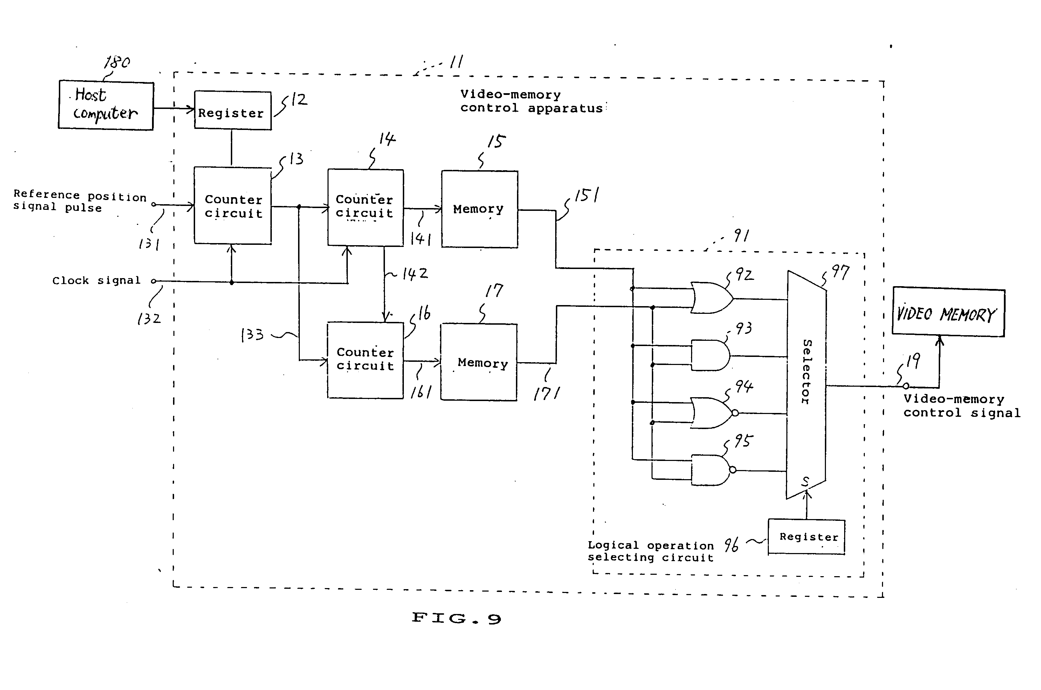

Fig. 9 illustrates a circuitry arrangement of the video-memory control apparatus of the second embodiment in which a logical operation selecting circuit 91 is provided in place of the logical operation circuit 18 of the first embodiment. The logical operation selecting circuit 91 comprises an OR circuit 92, an AND circuit 93, a NOR circuit 94, a NAND circuit 95, a register 96, and a selector 97. Two, horizontal and vertical, memory control signals 151 and 171 are fed to the four logical operation circuits 92, 93, 94, and 95 of which outputs are selectively controlled by a selector 97 in response to a given operation output selecting value from the register 96. A selected output of the selector 97 is further delivered as a video memory control signal 19. If the logical operation circuit is composed of only the AND operation, it produces an AND or NAND result from the two memory outputs (possible by inverting the polarity of all memory stored data). However, the logical operation selecting circuit 91 of the second embodiment can execute all the four, OR, AND, NOR, and NAND, operations.

As described, any desired type of memory control signal will be produced through the four discrete logical operations regardless of the polarity of the control signal input to a video memory and without changing the polarity of the memory stored data.

It would be understood that the present invention is not limited to the output of a single memory control signal described in the first and second embodiments and a plurality of the memory control signals will be produced. More specifically, the release of multiple outputs from each of the first and second memories will surely produce a plurality of memory control signals.

## Claims

1. A video-memory control apparatus comprising:
a register for setting a number of clock pulses to be counted;
a first counter circuit for starting counting clock pulses in response to a reference position signal fed from outside and upon having counted the number of clock pulses determined by the register, producing a count-end signal;
a second counter circuit responsive to the count-end signal for starting counting the clock pulses for each horizontal scanning period to produce a first count value and for producing a line clock signal at an end of each horizontal scanning period;
a third counter circuit responsive to the count-end signal for starting counting the line clock signal for each vertical scanning period to produce a second count value;
a first memory receiving the first count value as its address input for outputting a first control data stored therein;
a second memory receiving the second count value as its address input for outputting a second control data stored therein; and
a logical operation circuit for subjecting the first and second control data to a logical operation to obtain a video memory control signal fed to a video memory.

2. A video-memory control apparatus according to claim 1, wherein the logical operation circuit comprises at least one of AND, OR, NOR and NAND circuits.

3. A video-memory control apparatus comprising:
a register for setting a number of clock pulses to be counted;
a first counter circuit for starting counting clock pulses in response to a reference position signal fed from outside and upon having counted the number of clock pulses determined by the register, producing a count-end signal;
a second counter circuit responsive to the count-end signal for starting counting the clock pulses for each horizontal scanning period to produce a first count value and for producing a line clock signal at an end of each horizontal scanning period;
a third counter circuit responsive to the count-end signal for starting counting the line clock signal for each vertical scanning period to produce a second count value;
a first memory receiving the first count value as its address input for outputting a first control data stored therein;
a second memory receiving the second count value as its address input for outputting a second control data stored therein; and
a logical operation selecting circuit comprising four, AND, OR, NOR and NAND, logical operation circuits each being responsive to the first and second control data, a register for determining a logical operation result selecting value, and a selector responsive to the logical operation result selecting value for selecting one of four outputs from the respective AND, OR, NOR and NAND logical operation circuits to obtain a video memory control signal fed to a video memory.
